# EUROPEAN PATENT APPLICATION

(11) **EP 1 250 019 A1**
(43) Date of publication of application: **16.10.2002**
(21) Application number: 01271023.2
(22) Date of filing: 10.12.2001
(51) Int. Cl.: H04Q 7/38

(54) **RADIO BASE STATION APPARATUS AND COMMUNICATION TERMINAL APPARATUS**

(30) Priority: 12.12.2000 JP 2000377425
(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-Shi, Kanagawa 236-0058 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0110774
(87) International publication number: WO02049388

(57) **Abstract**

Wireless base station apparatus and communication terminal apparatus that perform wireless transmission with high capacity, without losing the real time aspect where several users engage in communication simultaneously. User A's and user B's transmit data are respectively sent to dedicated CH spreading sections 201 and 202 for spreading-modulation processing using codes #0 and #1. The spread-modulated data are each orthogonal-modulated in orthogonal modulating sections 204 and 205 and output to multiplexing section 207. User A's and user B's transmit data buffered in retransmit buffer 215 are sent to shared CH spreading section 203 for spreading-modulation processing using code #2. The spread-modulated data are orthogonal-modulated in orthogonal modulating section 206 and output to multiplexing section 207. In multiplexing section 207, data respectively orthogonal-modulated are multiplexed, and, after predetermined wireless transmission processing is executed in radio frequency transmitting section 208, transmitted via antenna 209 to communication terminals as a downlink channel signal.

## Description

### Technical Field

The present invention relates to digital wireless communication systems, and more particularly, to wireless base station apparatus and communication terminal apparatus for use in CDMA (Code Division Multiple Access ) systems.

### Background Art

With the development of digital wireless communication systems in recent years, stream-type data distribution services have been implemented in digital wireless communication systems. In stream-type data distribution services, data rates used for transmission are fixed in advance (e.g., 64kbps), and wireless channels with these data rates are assigned in a wireless network.

Meanwhile, when a data error occurs on a wireless channel of a digital wireless communication system, retransmission control for the error data takes place.

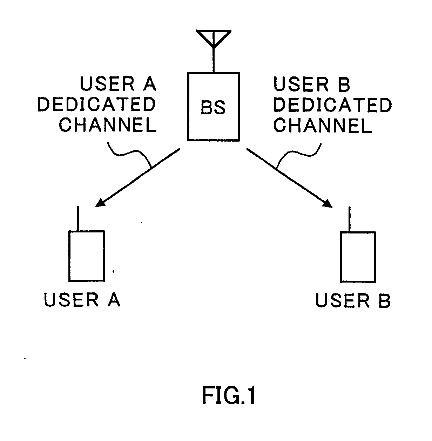

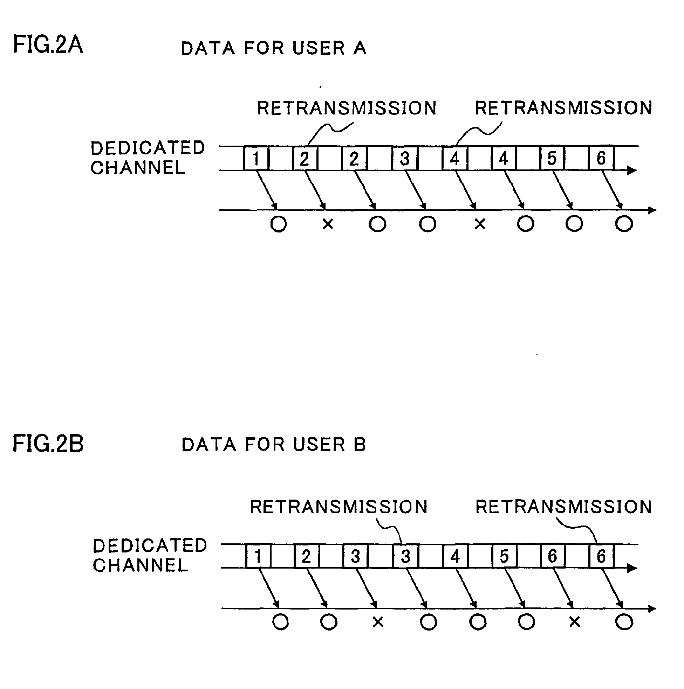

When retransmission takes place where the base station (BS) uses user A's dedicated channel (hereinafter "CH") to transmit downlink channel signals to user A and user B's dedicated CH to transmit downlink channel signals to user B as shown in FIG.1, the presence of retransmit data (i.e., retransmit packets) incurs delays in data transmission as shown in FIG.2A and FIG.2B.

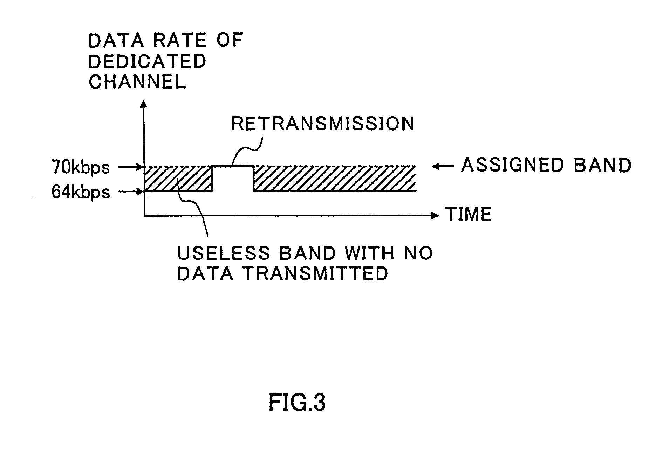

For this reason, in stream-type data distribution services that places emphasis on the real-time aspect, even when the occurrence of errors necessitates retransmission, channels with data rates (e.g., 70 kbps) higher than the initial data rates (e.g., 64 kbps) are assigned to accommodate retransmit data as shown in FIG.3, so that the real time aspect is not lost.

However, when a channel is assigned room for retransmit data in advance as shown in FIG.3, the assigned band is not available for full use with respect to intervals where there is no data retransmission (shaded portion in FIG.3), and the assigned band is therefore a waste.

For instance, 100 users engage in communication simultaneously at the data rate of 64kbps and the assigned band is 70kbps, the wasted band becomes substantial as follows: 6 kbps × 100 = 600 kbps.

### Disclosure of the Invention

The present invention aims to provide wireless base station apparatus and communication terminal apparatus that enable wireless communication that performs wireless communication with high accommodation efficiency, and without losing the real time aspect where several users engage in communication simultaneously.

According to an aspect of the present invention, a wireless base station apparatus comprises a data production section that produces retransmit data transmitted on a channel for retransmit data and transmit data transmitted on a channel for transmit data other than the retransmit data, and a transmission section that multiplexes and transmits the retransmit data and the transmit data to a communication terminal apparatus.

According to another aspect of the present invention, a wireless base station apparatus comprises a first spreading section that performs spreading-modulation processing with respect to retransmit data using a spreading code for a channel for retransmit data, and a second spreading section that performs spreading-modulation processing with respect to transmit data other than the retransmit data using a spreading code for a channel for transmit data other than the retransmit data, and a transmission section that multiplexes and transmits the data respectively spread-modulated in the above first and second spreading sections to a communication terminal apparatus.

According to yet another aspect of the present invention, a communication terminal apparatus comprises a reception section that receives retransmit data transmitted using a channel for retransmit data and that receives transmit data other than the retransmit data transmitted using a channel for transmit data other than the retransmit data, and a reassembling section that obtains received data by reassembling the retransmit data and transmit data.

According to yet another aspect of the present invention, a communication terminal apparatus comprises a first despreading section that performs despreading processing with respect to retransmit data using a spreading code for a channel for retransmit data, a second despreading section that performs despreading processing with respect to transmit data other than the retransmit data using a spreading code for a channel for transmit data other than the retransmit data, and a reassembling section that obtains received data by reassembling the data despread respectively in the above first and second despreading sections.

### Brief Description of the Drawings

FIG.1 is a drawing illustrating a digital wireless communication system comprising a base station apparatus and communication terminals;
FIG.2A is a drawing illustrating transmit data and retransmit data in conventional digital wireless communication systems;
FIG.2B is a drawing illustrating transmit data and retransmit data in conventional digital wireless communication systems;
FIG.3 is a drawing illustrating the relationship between channel and data rate in conventional wireless communication systems;
FIG.4 is a drawing illustrating a digital wireless communication system comprising a base station apparatus and communication terminal apparatus according to the present invention;
FIG.5 is a block diagram showing a configuration of a wireless base station apparatus according to Embodiment 1 of the present invention;
FIG.6 is a block diagram showing a configuration of a communication terminal apparatus according to Embodiment 1 of the present invention;
FIG.7 is a drawing showing the relationship between channel and data rate in a digital wireless communication system according to Embodiment 1 of the present invention;
FIG.8A is a drawing showing transmit data and retransmit data in a digital wireless communication system according to Embodiment 1 of the present invention;
FIG.8B is a drawing showing transmit data and retransmit data in a digital wireless communication system according to Embodiment 1 of the present invention;
FIG.8C is a drawing showing transmit data and retransmit data in a digital wireless communication system according to Embodiment 1 of the present invention;
FIG.9 is a block diagram showing a configuration of a wireless base station apparatus according to Embodiment 2 of the present invention;
FIG.10 is a block diagram showing a configuration of a wireless base station apparatus according to Embodiment 3 of the present invention;
FIG.11 is a block diagram showing a configuration of a communication terminal apparatus according to Embodiment 3 of the present invention;
FIG.12A is a drawing showing transmit data and retransmit data in a digital wireless communication system according to Embodiment 3 of the present invention;
FIG.12B is a drawing showing transmit data and retransmit data in a digital wireless communication system according to Embodiment 3 of the present invention; and
FIG.12C is a drawing showing transmit data and retransmit data in a digital wireless communication system according to Embodiment 3 of the present invention .

### Best Mode for Carrying Out the Invention

Now with reference to the accompanying drawings, embodiments of the present invention will be described in detail.

### (Embodiment 1)

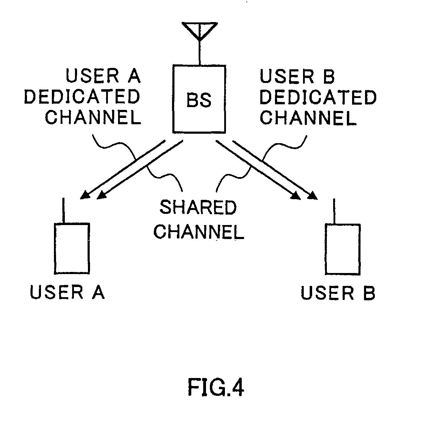

A case will be described here with the present embodiment where, as shown in FIG.4, a base station (BS) performing communication with user A's communication terminal and user B's communication terminal transmits data using dedicated channels and transmits retransmit data using a shared CH.

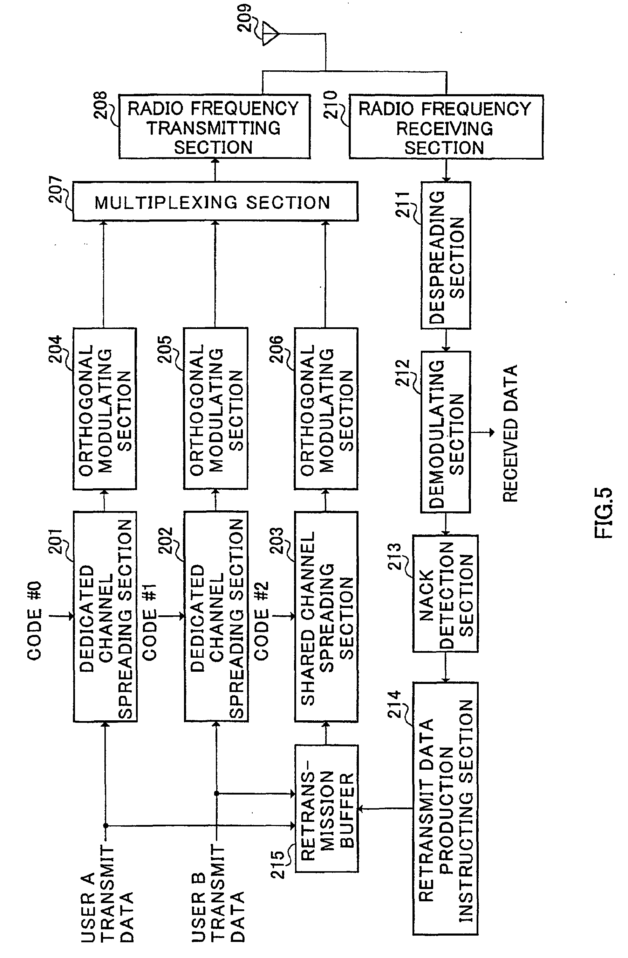

FIG.5 is a block diagram showing a configuration of a wireless base station apparatus according to Embodiment 1 of the present invention.

User A's transmit data (transmit data other than retransmit data) produced in an unshown data production section is sent to dedicated channel spreading section 201, where spreading-modulation processing takes place using code #0. The spread-modulated data is sent to orthogonal modulating section 204, where the data is subjected to orthogonal modulation processing by such means as QPSK (Quadrature Phase Shift Keying) and thereafter output to multiplexing section 207.

User B's transmit data produced in an unshown data production section is sent to dedicated channel spreading section 202, where spreading-modulation processing takes place using code #1. The spread-modulated data is sent to orthogonal modulating section 205, where the data is subjected to orthogonal modulation processing by such means as QPSK and thereafter output to multiplexing section 207.

User A's or user B's data buffered in retransmit buffer 215 is sent as reproduced data to shared channel spreading section 203 upon retransmission, where spreading-modulation processing using code #2 takes place. The spread-modulated data is sent to orthogonal modulating section 206, where the data is subjected to orthogonal modulation processing by such means as QPSK and thereafter output to multiplexing section 207.

Multiplexing section 207 multiplexes and transmits the data that are orthogonal-modulated respectively in orthogonal modulating sections 204, 205, and 206, to radio frequency transmitting section 208. In radio frequency transmitting section 208, predetermined wireless transmission processing (i.e., D/A conversion, up-conversion, etc.) takes place. The signal after the wireless transmission processing is transmitted to a partner terminal in communication via antenna 209 as a downlink channel signal.

Meanwhile, an uplink channel signal transmitted from a communication terminal is received in radio frequency receiving section 210 via antenna 209. In radio frequency receiving section 210, predetermined wireless reception processing (i.e., D/A conversion, up-conversion, etc.) takes place.

The signal after the wireless reception processing is output to despreading section 211 and subjected to despreading processing using the spreading code the communication terminal used, and the obtained despread signal is output to demodulating section 212. In demodulating section 212, demodulation processing using the despread signal takes place, and the received data is obtained. Also, the demodulated data is output to NACK detection section 213.

In NACK detection section 213, NACK signals are detected from the demodulated data. Upon detecting a NACK signal, NACK detection section outputs a control signal to retransmit data production instructing section 214. Upon receiving the control signal from NACK detection section 213, retransmit data production instructing section 214 gives instructions to retransmit buffer 215 to the effect of producing retransmit data.

In compliance with the instructions from retransmit data production instructing section 214, retransmit buffer 215 outputs user A's or user B's transmit data to shared CH despreading section 203. The instructions to the effect of retransmit data production contain the information that identifies as to which user's which information is to be retransmitted.

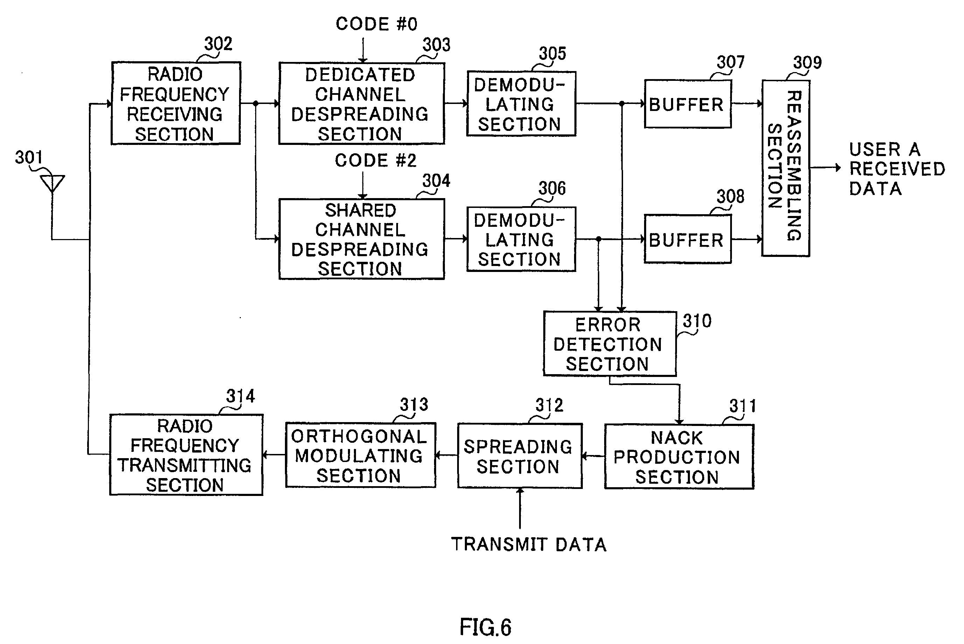

FIG.6 is a block diagram showing a configuration of a communication terminal apparatus according to Embodiment 1 of the present invention. We assume that the communication terminal apparatus shown as FIG.6 is user A's communication terminal. The configuration of user B's communication terminal is the same as the one shown in FIG.6.

Meanwhile, a downlink channel signal transmitted from a communication terminal is received in radio frequency receiving section 302 via antenna 301. In radio frequency receiving section 302, predetermined wireless reception processing (i.e., D/A conversion, up-conversion, etc.) takes place.

The signal after the wireless reception processing is output to dedicated CH despreading section 303 and to shared channel despreading section 304. In dedicated channel despreading section 303, the signal after the wireless reception processing is subjected to despreading processing using spreading code #0 used by the base station, and the obtained despread signal is output to demodulating section 305. In shared CH despreading section 304, the signal after the wireless reception processing is subjected to despreading processing using spreading code #2 used by the base station, an the obtained despread signal is output to demodulating section 306.

In demodulating section 305, demodulation processing takes place using a despreading code, and the demodulated data is stored in buffer 307 on a temporary basis. In demodulating section 306, demodulation processing using the despread signal takes place, and the demodulated data is stored in buffer 308 on a temporary basis. Also, the data that are respectively demodulated in demodulating section 305 and in demodulating section 306 are output to error detection section 310.

Demodulated data that are buffered in buffer 307 and in buffer 308 are output to reassembling section 309. Reassembling section 309 obtains user A's receiving data by means of reassembling the transmit and retransmit data using the sequence numbers and the like.

Error detection section 310 detects as to whether the demodulated retransmit or transmit data contains any error and, upon detecting error with the retransmit data or transmit data after demodulation, outputs a control signal to NACK production section 311.

NACK production section 311 produces a NACK signal upon receiving the control signal from error detection 310. The NACK signal is output to spreading section 312 which executes spreading-modulation processing on the transmit data, as well as on the NACK signal if necessary, using a predetermined spreading code and then outputs the spread-modulated data to orthogonal modulating section 313.

In orthogonal modulating section 313, the spread-modulated data is orthogonal-modulated by such means as QPSK, and the orthogonal-modulated data is output to radio frequency transmitting section 314. In radio frequency transmitting section 314, predetermined wireless transmission processing (i.e., D/A conversion, up-conversion, etc.) takes place. The signal after the wireless transmission processing is transmitted to a partner base station in communication via antenna 209 as an uplink channel signal.

A wireless communication system and communication terminal apparatus having the above configurations will be described next. A case will be described here where a shared channel that transmits retransmit data is a DSCH (Downlink Shared Channel).

According to a digital wireless communication system of the present invention, as shown in FIG.4, the base station (BS) uses user A's dedicated channel to send transmit data other than retransmit data to user A, and user B's dedicated channel to send transmit data other than retransmit data to user B. Also, the base station uses a shared CH to transmit retransmit data to user A or user B. Retransmit data alone is thus transmitted using a different channel.

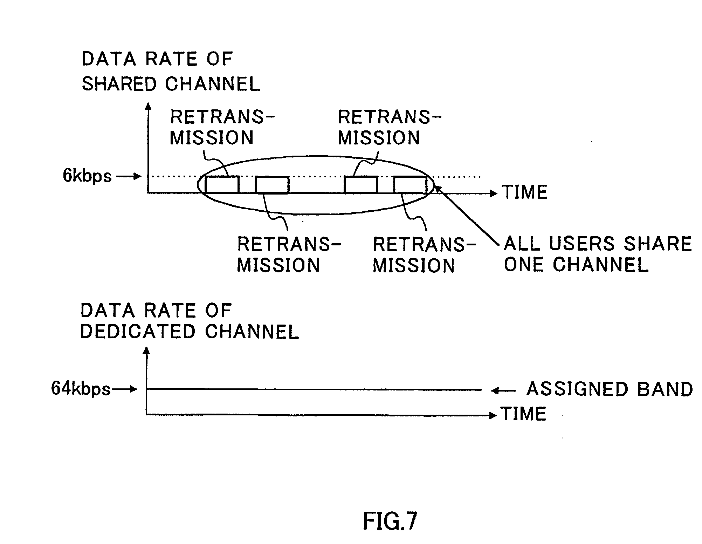

FIG. 7 is a drawing showing the relationship between channels and data rates in a digital wireless communication system according to Embodiment 1 of the present invention. With the present embodiment, a 6 kbps-band is assigned for the shared CH that transmits retransmit data, while for an dedicated channel, a 64-kbps band is assigned, which corresponds to the data rate. In short, with the present embodiment, as shown in FIG.7, all users share a DSCH that transmits all users' retransmit data.

Given this context, the above channel band for retransmit data that is shared by all users needs not to be provided individually on a per user basis, and it suffices to secure a low-rate band (e.g., 6 kbps), since there is little probability that several users retransmit simultaneously. For instance, where 100 users perform communication all simultaneously, the probability that these 100 users retransmit at the same time is low. So, the band such as 6 kbps × 100 = 600 kbps is unnecessary, but a 6 kbps-band is sufficient. Consequently, the band of channels that needs to be prepared on a wireless network can be reduced compared to conventional arts, such as 64 kbps × 100 + 6kbps = 6406 kbps with the above example.

Incidentally, even where several users retransmit simultaneously, it is still possible to reproduce data by providing a buffer, even though data delays might occur.

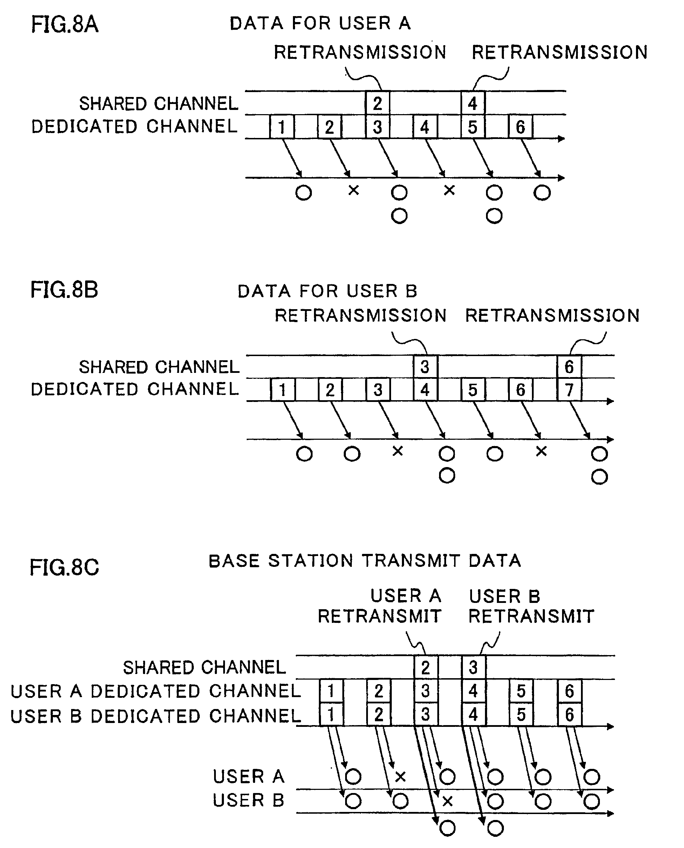

Next a case will be described here with reference to FIG.5, FIG.8A, FIG.8B, and FIG.8C, where transmission is performed using dedicated channels and a shared CH (DSCH). FIG.8A through FIG.8C each show transmit data and retransmit data in a digital wireless communication system according to Embodiment 1 of the present invention.

Transmit data for user A is subjected to spreading-modulation processing using spreading code #0 in dedicated CH spreading section 201 and, after orthogonal-modulated in orthogonal modulating section 206, transmitted to user A. When user A makes a request for retransmission, user A's transmit data buffered in retransmit buffer 215 is spread-modulated by spreading code #2 in shared CH spreading section 203, and, after orthogonal-modulated in orthogonal modulating section 206, transmitted to user A.

User A's transmit data and the retransmit data thereof are transmitted as shown in FIG.8A. In short, as in FIG.8A, transmit units (i.e., packets) 1, 3, 5, 6 are transmitted with no error, whereas error occurs with transmit units 2 and 4 and retransmission takes place. Transmit unit 2 is retransmitted using a shared CH (DSCH) upon the transmission of transmit unit 3. Transmit unit 4 is retransmitted using a shared CH (DSCH) upon the transmission of transmit unit 5.

Transmit data for user B is subjected to spreading-modulation processing using spreading code #1 in dedicated CH spreading section 202, and, after orthogonal-modulated in orthogonal modulating section 206, transmitted to user B. When user B makes a request for retransmission, user B's transmit data buffered in retransmit buffer 215 is spread-modulated by spreading code #2 in shared CH spreading section 203, and, after orthogonal-modulated in orthogonal modulating section 206, transmitted to user B.

User B's transmit data and the retransmit data thereof are transmitted as shown in FIG.8B. In short, as in FIG.8B, transmit units (i.e., packets) 1, 2, 4, 5, 7 are transmitted with no error, whereas error occurs with transmit units 3 and 6 and retransmission takes place. Transmit unit 3 is retransmitted using a shared CH (DSCH) upon the transmission of transmit unit 4. Transmit unit 6 is retransmitted using a shared CH (DSCH) upon the transmission of transmit unit 7.

So, user A's transmit data, user B's transmit data, and the retransmit data of these are transmitted as base station transmit data as shown in FIG.8C. That is, as for user A's transmit data, no error occurs in the transmission of transmit units 1, 3, 5, and 6, but error occurs with transmit units 2 and 4. As for user B's transmit data, no error occurs in the transmission of transmit units 1, 2, 4, and 5, but error occurs with transmit units 3 and 6. As for the shared CH, user A's transmit data is retransmitted with transmit unit 3, and user B's transmit data is transmitted with transmit unit 4.

Incidentally, when DSCH is used as a shared channel, information that denotes as to which user each transmit unit corresponds to is transmitted using DPCH (Dedicated Physical Channel) attached to DSCH, and the information that denotes retransmission is informed to each user by the upper-layer channel.

The present embodiment thus makes it unnecessary to provide a band for data retransmission for each dedicated channel. In other words, by making a channel that sends retransmit data separate from channels that send transmit data, the user capacity can be enhanced without creating a useless band on a channel, and the real time aspect is secured even when retransmit data is present. Furthermore, since a channel that accommodates retransmit data obtains the effect of statistical multiplexing by multiplexing several users' retransmit data, the volume of the channel that transmits retransmit data can be made small.

### (Embodiment 2)

A case will be described here with the present embodiment where the transmit power of a shared CH that transmits retransmit data is adjusted in compliance with the retransmission situation.

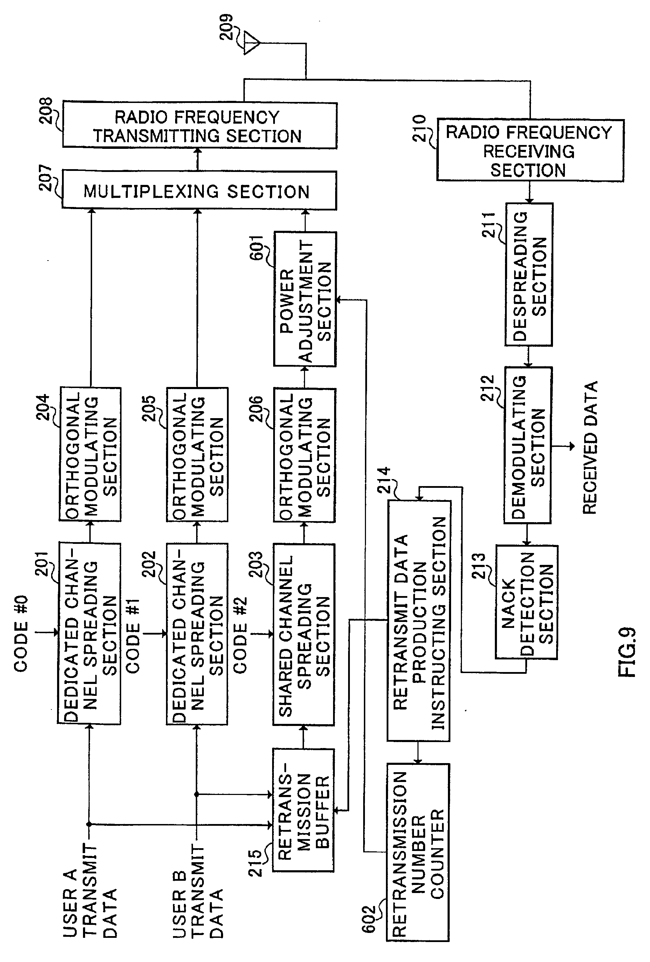

FIG.9 is a block diagram showing a configuration of a wireless base station apparatus according to Embodiment 2 of the present invention.

The sections in FIG.9 that are identical with FIG.5 are given the same numerals with FIG.5 without further description.

The wireless base station apparatus shown as FIG.9 comprises retransmission counter 602 that measures the number of times retransmission takes place, and power adjustment section 601 that adjusts transmit power (the power) in compliance with the number of times retransmission takes place.

With the present embodiment, power adjustment is done only with respect to the channel that transmits retransmit data in compliance with the number of times retransmission takes place. Generally, a large number of times of retransmission denote a large number of transmission errors and therefore a poor transmission environment. Where the transmission environment is poor, retransmission errors are reduced by increasing the power for data with respect to which error is strongly undesirable. This configuration is one that is made possible with the present invention that transmits retransmit data alone using a separate channel.

With the wireless base station apparatus with the above configurations, when an NA signal sent as an uplink channel signal is detected in NACK detection section 213, retransmit data production instructing section 214 instructs retransmit data production. This retransmit data production instructing is output to buffer 215 and to retransmission counter 602. With every retransmit data production instructing, retransmission counter 602 increments the counter by one.

When the number of times retransmission takes place over a given period exceeds the predetermined number, retransmission counter 602 judges that the transmission environment is poor and outputs a control signal to the effect of increasing the power to power adjustment section 601 which, upon receiving the control signal from retransmission counter 602, increases the transmit power of the shared CH.

Also, when the number of times retransmission takes place is extremely low over a given period, retransmission counter 602 judges that the transmission environment is good and outputs a control signal to the effect of reducing the power to power adjustment section 601 which, upon receiving the control signal from retransmission counter 602, reduces the transmit power of the shared CH.

Incidentally, as to the above predetermined number (threshold) of times of retransmission, there is no fixed one, and the number can be modified whenever appropriate. With respect to power adjustment, it is performed for instance by gradually increasing or decreasing the power. Power adjustment can also be modified depending on the quality demanded by the other end of transmission. As to the given period for counting the number of times retransmission takes place, there is no fixed one, and the period can be set as appropriate.

Incidentally, power adjustment can be modified adaptively depending on the quality requested by the transmit destination party. For instance, in the transmission of images, when user A displays a larger picture or a picture of higher resolution than user B does, the quality with user A needs to be enhanced. In such context, user A and user B employ different transmission powers when performing transmission, which enables the transmission that satisfies each user's quality.

Thus with the present embodiment, it is possible to adjust transmit power with a channel that transmits retransmit data alone and to thus enhance the quality of retransmit data alone. Also, data quality can be modified on a per user basis.

### (Embodiment 3)

A case will be described here with the present embodiment where transmit data other than retransmit data is also transmitted using a shared CH.

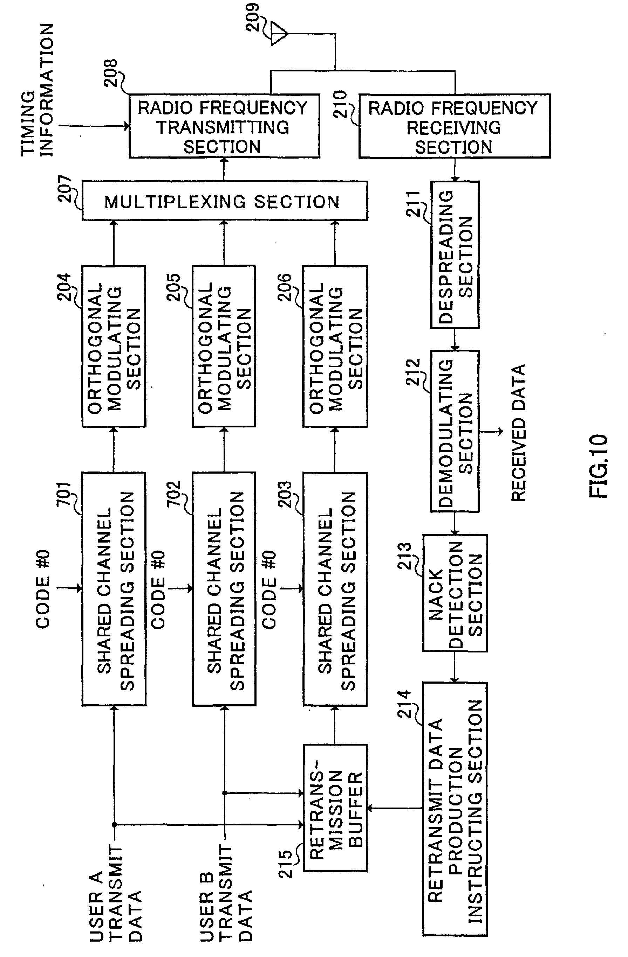

FIG.10 is a block diagram showing a configuration of a wireless base station apparatus according to Embodiment 3 of the present invention.

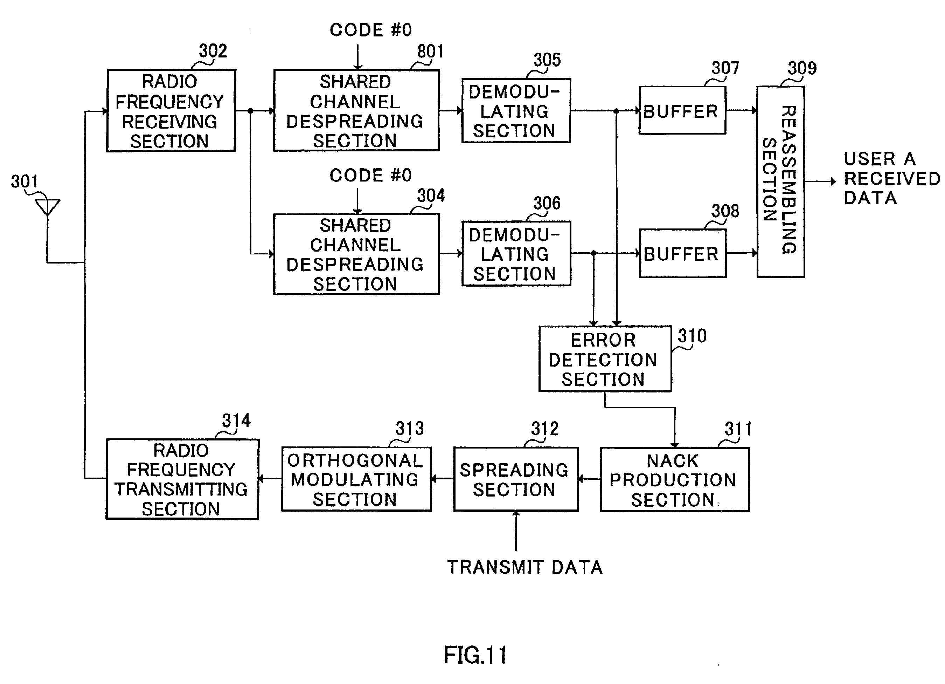

The sections in FIG.10 that are identical with FIG.5 are given the same numerals as FIG.5 without further description. FIG.11 is a block diagram showing a configuration of a communication terminal apparatus according to Embodiment 3 of the present invention. The sections in FIG. 11 that are identical with FIG. 6 are given the same numerals as FIG.6 without further description.

The wireless base station apparatus shown as FIG.10 comprises shared CH spreading section 701 that spread-modulates user A' s transmit data by spreading code #0 for the shared channel, and shared CH spreading section 702 that spread-modulates user B's transmit data by spreading code #0 for the shared channel, instead of dedicated CH spreading sections 210 and 202 shown in FIG.5.

The communication terminal apparatus shown in FIG.11 comprises shared CH despreading section 801 that despreads user A's transmit data by spreading code #0 for the shared channel, instead of dedicated CH despreading section of the communication terminal apparatus shown in FIG.6.

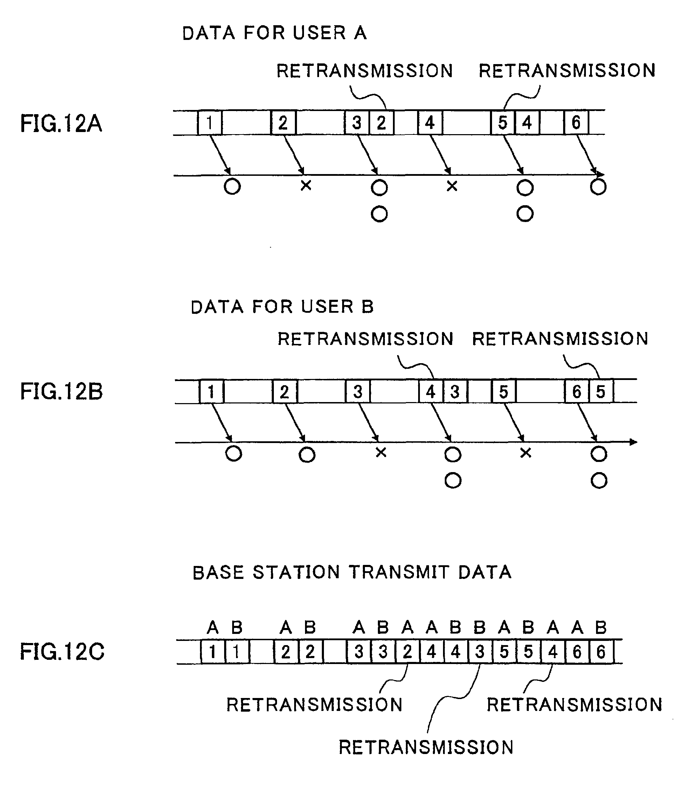

Next with reference to FIG.10, FIG.12A, FIG.12B, and FIG.12C, a case will be described here where transmission is performed using dedicated channels and a shared CH (DSCH). FIG.12A through FIG.12C each show transmit data and retransmit data in a digital wireless communication system according to Embodiment 3 of the present invention.

Transmit data for user A is subjected to spreading-modulation processing in dedicated CH spreading section 701 by spreading code #0, and, after orthogonal modulation processing in orthogonal modulating section 204, transmitted to user A. When user A makes a request for retransmission, user A's transmit data buffered in retransmit buffer 215 is spread-modulated by spreading code #0 in shared CH spreading section 203, and, after orthogonal-modulated in orthogonal modulating section 206, transmitted to user A.

User A's transmit data and the retransmit data thereof are transmitted as shown in FIG.12A. In short, as in FIG.12A, transmit units 1, 3, 5, 6 are transmitted with no error, whereas error occurs with transmit units 2 and 4 and retransmission takes place. Transmit unit 2 is retransmitted using the shared CH when the retransmit time slot for transmit 3 is transmitted. Transmit unit 4 is retransmitted using the shared CH when the retransmit time slot for transmit unit 5 is transmitted.

Transmit data for user B is subjected to spreading-modulation processing in dedicated CH spreading section 205 by spreading code #0, and, after orthogonal modulation processing in orthogonal modulating section 205, transmitted to user B. When user B makes a request for retransmission, user B's transmit data buffered in retransmit buffer 215 is spread-modulated by spreading code #0 in shared CH spreading section 206, and, after orthogonal-modulated in orthogonal modulating section 206, transmitted to user B.

User B's transmit data and the retransmit data thereof are transmitted as shown in FIG.12B. In short, as in FIG.12B, transmission units 1, 2, 4, and 6 are transmitted with no error, whereas error occurs with transmit units 3 and 5 and retransmission takes place. Transmit unit 3 is retransmitted using the shared CH when transmit unit 4 is transmitted. Transmit unit 5 is retransmitted using the shared CH when transmit unit 6 is transmitted.

So, user A's transmit data, user B's transmit data, and retransmit data of these are transmitted as the base station transmit data as shown in FIG. 12C. With the present embodiment, since retransmit data and transmit data are transmitted on one same shared CH, transmission is performed by means of time-division multiplexing. With the present embodiment, user A's transmit data, user B's transmit data, and retransmit data are transmitted once in every three slots. In this context, the shared CH is time-divided and transmission is performed, and so a time slot corresponds to a channel. So as in Embodiments 1 and 2, retransmit data uses a separate channel from those for user A's transmit data and user B's transmit data.

As shown in FIG.12C, as to user A's transmit data, transmit units 1, 3, 5, and 6 are transmitted with no error, whereas error occurs with transmit units 2 and 4. As to user B's transmit data, transmit units 1, 2, 4, and 6 are transmitted with no error, whereas error occurs with transmit units 3 and 5. Accordingly, user A's transmit data in transmission unit 2 is retransmitted using the retransmission time slot for transmission unit 3, user B's transmit data in transmission unit 3 is retransmitted using the retransmission time slot for transmission unit 4, and user A's transmit data in transmission unit 4 is retransmitted using the retransmission time slot for transmission unit 5.

The present embodiment also makes it unnecessary to provide a band for data retransmission. Consequently, the user capacity can be enhanced without creating useless space on a channel, with the real-time aspect still retained even in the presence of retransmit data. Also, a channel that accommodates retransmit data obtains the effect of statistical multiplexing by multiplexing several users' retransmit data, the volume of a channel that transmits retransmit data can be made small. Furthermore, where several users use the same spreading code and send transmit data other than retransmit data, or where the same spreading code is used for both retransmit data and transmit data other than retransmit data, a CH is time-divided and transmission is performed, whereby an effect of reducing the volume of a channel that transmits retransmit data can be obtained.

The present embodiment describes a case where shared CH spreading sections 701, 702, and 203 are configured as separate circuits. However, these spreading sections may be configured into one shared CH spreading section. Similarly, although the present embodiment describes a case where shared CH despreading sections 801 and 304 are configured as separate circuits, these despreading sections may be configured into one shared despreading section.

The present invention is not limited to above Embodiment 1 through Embodiment 3 and can be implemented in a variety of modified forms . Although above Embodiment 1 through Embodiment 3 describe cases where QPSK is employed for orthogonal modulation, the present invention is applicable to cases where orthogonal modulation is performed by means other than QPSK. Furthermore, although above Embodiment 1 through Embodiment 3 describe cases with 2 users, the present invention is applicable to cases with more than 3 users.

The above embodiments describe cases where retransmit data is transmitted using a shared CH. However, the present invention is good as long as a channel that transmits transmit data and a channel that transmits retransmit data are separate channels, and the present invention is not limited to cases where a channel that transmits retransmit data is a shared channel.

The above embodiments describe cases where retransmit data is transmitted on a shared channel. However, the present invention is good as long as a channel that transmits retransmit data and a channel that transmits transmit data are separate channels, and transmit data other than retransmit data may be transmitted on a shared channel.

The above embodiments describe cases where a shared channel that transmits retransmit data is DSCH. However, the present invention is applicable to a non-DSCH shared channel as long as a channel that transmits retransmit data is a shared channel shared by several users.

This application is based on Japanese Patent Application No. 2000-377425 filed on December 12, 2000, entire content of which is expressly incorporated by reference herein.

### Industrial Applicability

The present invention is applicable to digital wireless communication systems, and more particularly to wireless base station apparatus and communication terminal apparatus in CDMA systems.

## Claims

1. A wireless base station apparatus comprising:
a data production section that produces retransmit data transmitted on a channel for retransmit data and transmit data transmitted on a channel for transmit data other than the retransmit data, and
a transmission section that multiplexes and transmits the retransmit data and the transmit data to a communication terminal apparatus.

2. The wireless base station apparatus according to claim 1, wherein the channel for retransmit data is a channel shared by a plurality of users.

3. The wireless base station apparatus according to claim 2, wherein the channel for transmit data other than the retransmit data is a channel shared by a plurality of users that is time-divided with the channel for retransmit data.

4. The wireless base station apparatus according to claim 1, comprising:
a counter that counts the number of times retransmission takes place over a given period, and
a power adjustment section that adjusts transmit power for the channel that transmits retransmit data, the adjustment done in accordance with said number of times retransmission takes place.

5. A wireless base station apparatus comprising:
a first spreading section that performs spreading-modulation processing with respect to retransmit data using a spreading code for a channel for retransmit data, and
a second spreading section that performs spreading-modulation processing with respect to transmit data other than the retransmit data using a spreading code for a channel for transmit data other than the retransmit data, and
a transmission section that multiplexes and transmits the data respectively spread-modulated in said first and second spreading sections to a communication terminal apparatus.

6. The wireless base station apparatus according to claims 5, wherein the channel for retransmit data is a channel shared by a plurality of users.

7. The wireless base station apparatus according to claim 6, wherein the channel for transmit data other than the retransmit data is a channel shared by a plurality of users that is time-divided with the channel for retransmit data.

8. The wireless base station apparatus according to claim 5, comprising:
a counter that counts the number of times retransmission takes place over a given period, and
a power adjustment section that adjusts transmit power for the channel that transmits retransmit data, the adjustment done in accordance with said number of times retransmission takes place.

9. A communication terminal apparatus comprising:
a reception section that receives retransmit data transmitted using a channel for retransmit data and that receives transmit data other than the retransmit data transmitted using a channel for transmit data other than the retransmit data, and
a reassembling section that obtains received data by reassembling the retransmit data and the transmit data.

10. The communication terminal apparatus according to claim 9, wherein the channel for retransmit data is a channel shared by a plurality of users.

11. The communication terminal apparatus according to claim 10, wherein the channel for transmit data other than the retransmit data is a channel shared by a plurality of users that is time-divided with the channel for retransmit data.

12. A communication terminal apparatus comprising:
a first despreading section that performs despreading processing with respect to retransmit data using a spreading code for a channel for retransmit data, and
a second despreading section that performs despreading processing with respect to transmit data other than the retransmit data using a spreading code for a channel for transmit data other than the retransmit data, and
a reassembling section that obtains received data by reassembling the data despread respectively in said fist and second despreading sections.

13. The communication terminal apparatus according to claim 12, wherein the channel for retransmit data is a channel shared by a plurality of users.

14. The communication terminal apparatus according to claim 13, wherein the channel for transmit data other than the retransmit data is a channel shared by a plurality of users that is time-divided with the channel for retransmit data.

15. A wireless communication method comprising in a wireless base station apparatus:
a first spreading step in which spreading-modulation processing is executed with respect to retransmit data using a spreading code for a channel that transmits retransmit data,
a second spreading step in which spreading-modulation processing is executed with respect to transmit data other than the retransmit data using a spreading code for a channel that transmits transmit data other than the retransmit data, and
a transmission step in which the data respectively despread-modulated in said first and second spreading steps are multiplexed and transmitted to a communication terminal apparatus,
and furthermore comprising in said communication terminal apparatus:
a first despreading step in which despreading processing is executed with respect to the retransmit data using the spreading code for a channel that transmits retransmit data,
a second despreading step in which despreading processing is executed with respect to the transmit data other than the retransmit data using the spreading code for a channel that transmits transmit data other than the retransmit data, and
a reassembling step in which received data is obtained by reassembling the data respectively despread in said first and second despreading steps.
